# FASCICULE DE BREVET EUROPEEN

(11) **EP 3 016 791 B1**
(45) Date de publication et mention de la délivrance du brevet: **25.08.2021**
(21) Numéro de dépôt: 14736711.4
(22) Date de dépôt: 01.07.2014
(51) Int. Cl.: B29C 35/08, B29C 49/64, B29C 49/06

(54) **MODULE DE CHAUFFAGE COMPORTANT UNE LAMPE ET UNE LENTILLE FIXÉE PAR UNE BRIDE SUR UNE PARTIE NON ÉMISSIVE DE LA LAMPE**
HEIZMODUL MIT EINER LAMPE UND EINER LINSE, BEFESTIGT AN EINER SCHIENE AN EINEM EMISSIONSFREIEN TEIL DER LAMPE
HEATING MODULE COMPRISING A LAMP AND A LENS FASTENED BY A BRACE TO A NON-EMISSIVE PORTION OF THE LAMP

(30) Priorité: 04.07.2013 FR 1356538
(43) Date de publication de la demande: 11.05.2016
(73) Titulaire: Sidel Participations, 76930 Octeville-sur-Mer (FR)
(72) Inventeur: HEUZEBROC, Pierre, 76930 Octeville -sur-Mer (FR); MORIN, Stéphane, 76930 Octeville -sur-Mer (FR)
(74) Mandataire: Sidel Group
(86) Numéro de dépôt international: PCT/EP2014/063913
(87) Numéro de publication internationale: WO 2015/000875

(56) Documents cités:
- EP-A1- 0 820 376
- EP-A1- 1 366 886
- WO-A1-2011/039667
- JP-A- 2008 198 571
- None

## Description

L'invention concerne un module de chauffage pour une préforme en matériau thermoplastique.

L'invention concerne plus particulièrement un module de chauffage pour une préforme en matériau thermoplastique, qui comporte :
- au moins une lampe comportant une ampoule tubulaire d'axe longitudinal, l'ampoule étant fermée à ses deux extrémités longitudinales par deux pincements, la lampe comportant deux culots fixés chacun à l'un des pincements, le tronçon tubulaire de l'ampoule formant une partie émissive d'un rayonnement électromagnétique chauffant, tandis que les pincements et les culots forment une partie non émissive n'émettant pas ledit rayonnement chauffant ;
- au moins une lentille longitudinale qui est fixée à la lampe, au moyen d'au moins une bride de fixation, parallèlement à la partie émissive pour focaliser le rayonnement chauffant vers une zone sélectionnée de la préforme.

Il est connu de fabriquer des récipients en matériau thermoplastique par formage de préformes, par exemple par soufflage ou par étirage-soufflage. Pour réaliser l'opération de formage, il est nécessaire de chauffer préalablement le corps des préformes à une température de transition vitreuse afin de le rendre malléable. Les installations de fabrication en série de récipients comportent à cet effet des stations de chauffage des préformes.

Une station de soufflage présente généralement la forme d'un tunnel dans lequel au moins l'une des parois est formée par un assemblage de plusieurs modules de chauffage tel que celui décrit précédemment. Les préformes défilent le long du tunnel devant les modules de chauffage en tournant sur elles-mêmes afin que leur corps soit chauffé de manière uniforme à une température adaptées pour l'opération de formage.

Les lampes utilisées pour le chauffage des préformes sont généralement des lampes de type halogène qui émettent un rayonnement électromagnétique chauffant, par exemple un rayonnement infrarouge. Elles comportent une partie tubulaire de l'ampoule renferme un filament qui s'étend longitudinalement entre deux culots. Chaque culot permet l'alimentation en électricité du filament. Lorsqu'il est alimenté avec la puissance électrique adéquate, le filament émet le rayonnement chauffant radialement dans toutes les directions.

Par ailleurs, pour le formage de certains types de récipient en matériau thermoplastique, il est préférable de chauffer certaines zones de la préforme à des températures très précises. Pour permettre de chauffer sélectivement certaines zones de la préforme, il est connu d'interposer une lentille optique sur le trajet du faisceau. Une telle solution est décrite plus en détail dans le document EP-B1-0.820.376. La lentille permet de focaliser le rayonnement chauffant dans une zone précise de la préforme et ainsi d'éviter l'échauffement de certaines zones de la préforme telle que le col.

La lentille est généralement fixée sur la portion tubulaire de l'ampoule par l'intermédiaire de brides de fixations. Il s'agit par exemple de colliers qui sont serrés autour de la partie émissive de la lampe.

Néanmoins, les brides de fixation font alors de l'ombre en empêchant une partie du rayonnement chauffant d'atteindre les préformes.

Pour améliorer l'efficacité de ces lampes, il est connu d'agencer des moyens réfléchissants pour rediriger le rayonnement vers la préforme. Pour ce faire, il est connu d'agencer un réflecteur en arrière de la lampe. Une telle conception est par exemple décrite dans le document WO-A1-2011/039667.

Cependant, dans cette configuration, l'espace réservé entre le réflecteur et la partie tubulaire de l'ampoule est insuffisant pour le passage des brides de fixation de la lentille.

Le document EP2366886A1 décrit un appareil de chauffage de préformes comprenant des éléments de chauffage fixés par des douilles. Les douilles et des éléments de focalisation sont reçus dans une base. Il n'y a pas de positionnement efficace entre l'élément de focalisation et l'élément de chauffage.

Le document JP2008198571A décrit une source de lumière et une lentille fixées l'une à l'autre par adhésifs. Cela ne permet pas de réparer la lentille en cas de casse.

L'invention propose un module de chauffage du type décrit précédemment, caractérisé en ce que la fixation de chaque bride sur la lampe est réalisée uniquement sur la partie non émissive de la lampe.

Selon d'autres caractéristiques de l'invention :
- le module de chauffage comporte au moins un réflecteur qui est agencé à distance de la partie émissive de la lampe, en opposition par rapport à la lentille ;
- la bride est fixée par serrage sur la partie non émissive de la lampe ;
- la bride de fixation est fixée par emboîtement élastique de formes complémentaires sur la partie non émissive de la lampe ;
- au moins une bride de fixation est fixée sur l'un des culots ;
- la bride est fixée par emboitement longitudinale d'une fenêtre de la bride sur une extrémité longitudinale libre de forme complémentaire du culot ;
- la bride de fixation comporte deux mors qui enserrent le culot de la lampe pour la fixation par serrage de la bride sur la lampe ;
- les deux mors définissent à leur interface un logement pour emprisonner une extrémité longitudinale libre de la lentille ;
- au moins un mors comporte une face de butée longitudinale contre une face associée du culot pour le positionnement longitudinal de la bride sur la lampe ;
- les mors sont fixés ensembles par vissage ;
- au moins une bride de fixation est fixée sur un des pincements de la lampe ;
- la bride de fixation comporte une fente munie d'un étranglement qui est emboîtée élastiquement sur le pincement associé de la lampe ;
- chaque bride de fixation est réalisée en un matériau conducteur de chaleur pour faire office de radiateur pour les parties non émissives.

D'autres caractéristiques et avantages de l'invention apparaitront au cours de la lecture de la description détaillée qui va suivre pour la compréhension de laquelle on se reportera aux dessins annexés parmi lesquels :
- la figure 1 est une vue en perspective qui représente un module de chauffage dans lequel une lentille de focalisation est fixée sur la lampe agencée à l'extrémité inférieure du module ;
- la figure 2 est une vue en coupe transversale selon le plan de coupe 2-2 de la figure 1 ;
- la figure 3 est une vue en perspective qui représente la lampe d'extrémité inférieure du module de chauffage de la figure 1 ;
- la figure 4 est une vue en perspective éclatée qui représente la lentille prête à être fixée à la lampe de la figure 3 par l'intermédiaire d'une bride réalisée selon un premier mode de réalisation de l'invention ;
- la figure 5 est une vue en perspective similaire à celle de la figure 4 qui représente la lentille montée sur la lampe ;
- la figure 6 est une vue en perspective qui représente une face supérieure du mors inférieur de la bride de la figure 4 ;
- la figure 7 est une vue en perspective qui représente une face inférieure du mors supérieur de la bride de la figure 4 ;
- la figure 8 est une vue en perspective éclatée qui représente la lentille fixée sur la lampe par l'intermédiaire d'une bride réalisée selon un deuxième mode de réalisation de l'invention ;
- la figure 9 est une vue en perspective éclatée qui représente la lentille fixée sur la lampe par l'intermédiaire d'une bride réalisée selon un troisième mode de réalisation de l'invention.

Dans la suite de la description, des éléments présentant une structure identique ou des fonctions analogues seront désignés par des mêmes références.

Dans la suite de la description, on adoptera à titre non limitatif des orientations longitudinale, verticale et transversale indiquées par le trièdre "L,V,T" des figures. L'orientation verticale "V" est une référence géométrique qui ne correspond pas nécessairement à l'orientation de la gravité. L'orientation longitudinale "L" est parallèle à l'axe "A" principal de l'ampoule tubulaire de la lampe de chauffage. La direction transversale "T" est dirigée d'arrière en avant depuis la lampe 16 vers la préforme 12.

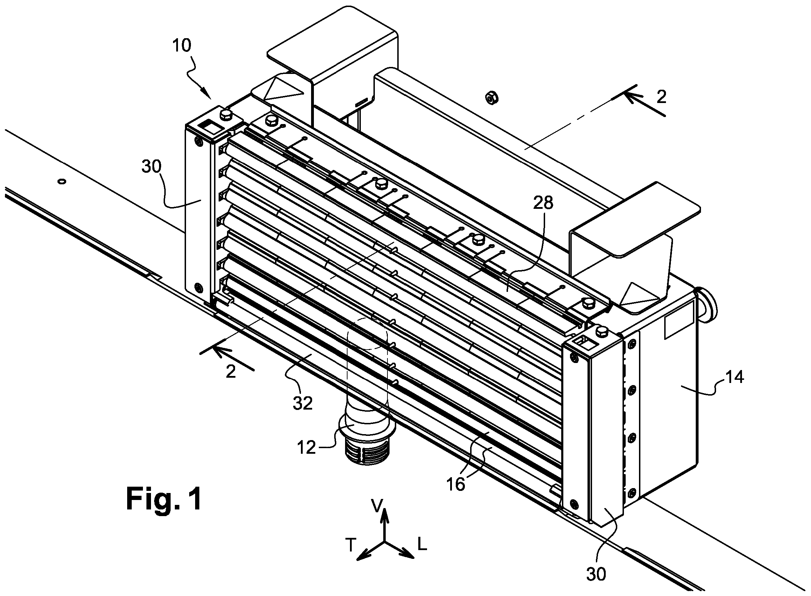

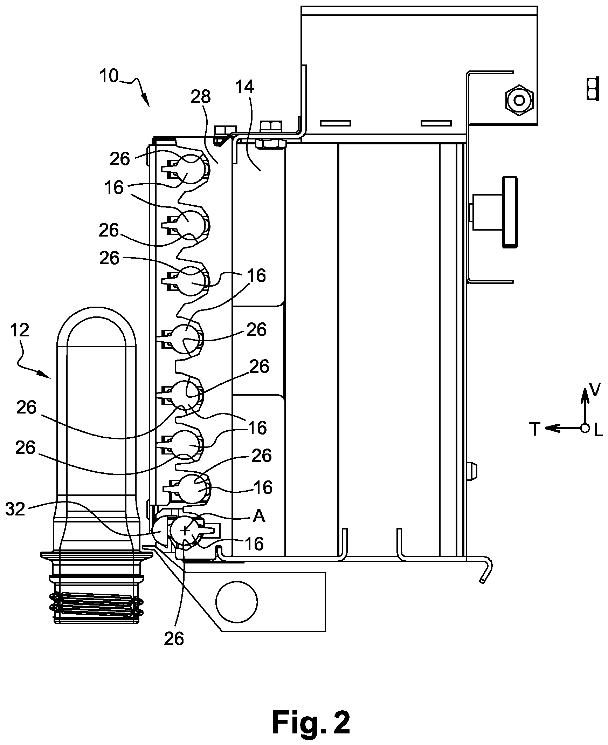

On a représenté aux figures 1 et 2 un module 10 de chauffage pour des préformes 12 en matériau thermoplastique dont une est représentée aux figures. Les préformes 12 sont portées par un dispositif (non représenté) de convoyage qui les fait défiler et tourner selon une direction longitudinale.

Le module 10 de chauffage comporte un support 14 fixe qui porte une pluralité de lampes 16 de chauffage qui sont identiques.

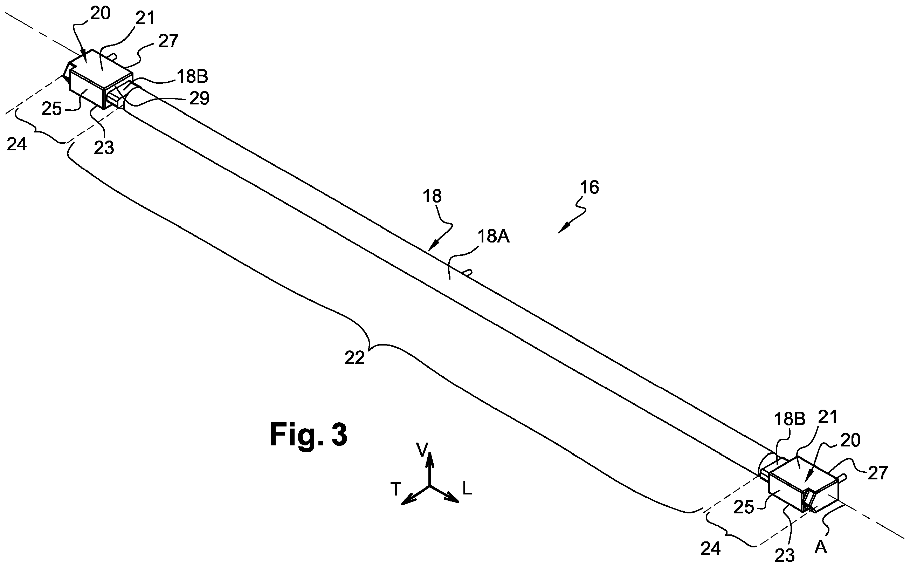

Comme représenté à la figure 3, chaque lampe 16 comporte une ampoule 18 tubulaire d'axe "A" longitudinale. L'ampoule 18 comporte un tronçon 18A central tubulaire creux qui est fermée hermétiquement à ses deux extrémités longitudinales par deux pincements 18B. Les deux pincements 18B sont aplatis dans un plan longitudinal transversal.

Le tronçon 18A tubulaire creux renferme des moyens (non représentés) d'émission d'un rayonnement électromagnétique apte à chauffer le matériau thermoplastique constituant la préforme 12, par exemple un rayonnement infrarouge. Il s'agit par exemple d'un filament longitudinal qui s'étend entre les deux pincements 18B et qui baigne dans une atmosphère adapté à l'émission du rayonnement chauffant. S'agissant d'une lampe de type halogène, l'atmosphère contient un gaz halogène.

L'ampoule 18 est réalisée en un matériau transparent et résistant au chauffage, par exemple en verre de quartz.

La lampe 16 comporte aussi deux culots 20 dont chacun est fixé à un pincement 18B associé. Chaque culot 20 présente une enveloppe parallélépipédique qui comporte une face 21 horizontale supérieure, une face 23 horizontale inférieure, une face 25 verticale longitudinale avant, une face 27 verticale longitudinale arrière. Chaque culot 20 comporte aussi une face 29 verticale transversale, dite face 29 latérale interne, qui est tournée vers l'ampoule 18 et qui comporte un orifice de passage pour l'extrémité libre du pincement 18B associé. Chaque culot 20 comporte aussi une face 31 verticale transversale, dite face 31 latérale externe, qui est opposée à la face 29 latérale.

Chaque culot 20 renferme des moyens (non représentés) pour commander l'alimentation en électricité du filament.

Le tronçon 18A tubulaire de l'ampoule 18 et son contenu seront désignés comme "partie 22 émissive" de la lampe 16 car ils sont aptes à émettre le rayonnement chauffant radialement dans toutes les directions lorsqu'ils sont alimentés en courant électrique.

Au contraire, les pincements 18B et les culots 20 forment une "partie 24 non émissive" car ils n'émettent pas ledit rayonnement électromagnétique apte à chauffer la préforme 12.

En se reportant à nouveau aux figures 1 et 2, chaque lampe 16 est fixée de manière démontable au support 14 par l'intermédiaire de leurs culots 20. A cet effet, le support 14 comporte des moyens (non représentés) de connexion, mécanique et électrique, recevant les culots 20.

Les lampes 16 sont ici fixes par rapport au support 14, c'est à dire qu'il n'est pas possible de régler leur position transversale par rapport au support 14 fixe.

Les lampes 16 sont réparties verticalement les unes au-dessus des autres pour former une paroi verticale chauffante le long du trajet de la préforme 12.

Comme cela est particulièrement visible à la figure 2, le module 10 de chauffage comporte aussi des réflecteurs 26 dont chacun est associé à une lampe 16. Chaque réflecteur 26 est agencé transversalement à distance en arrière de la partie 22 émissive de la lampe 16.

Chaque réflecteur 26 est conçu pour réfléchir le rayonnement chauffant vers l'avant, en direction de la préforme 12. A cet effet, chaque réflecteur 26 présente une forme globalement semi-cylindrique concave ouverte vers l'avant dans laquelle la partie 22 émissive est logée.

Tous les réflecteurs 26 du module 10 sont ici formés dans un bloc 28 commun agencé transversalement en arrière des lampes 16. Ce bloc 28 est ici fixé au support 14 fixe.

En variante, les réflecteurs du module sont formés dans plusieurs blocs, chaque bloc comportant au moins deux réflecteurs. Les blocs peuvent ainsi être empilés verticalement en fonction du nombre de lampes à agencer dans un module. Un tel mode de réalisation est particulièrement avantageux lorsque l'installation doit être adaptée à des préformes de différentes hauteur. Par exemple pour de petites préformes de 5 cm de hauteur, le module ne comportera que quatre lampes, tandis que pour des préformes de 10 cm de hauteur, le module comportera huit lampes. Selon cet exemple, chaque bloc est conçu pour comporter quatre réflecteurs.

Chaque réflecteur 26 présente une dimension longitudinale qui est sensiblement égale à la dimension longitudinale de la partie 22 émissive de la lampe 16. Par conséquent, les parties 24 non émissives de la lampe sont agencées longitudinalement en saillie de part et d'autre du bloc 28.

Le support 14 fixe comporte en outre des moyens de refroidissement des culots 20 des lampes 16 par circulation d'un fluide caloporteur au niveau des parties 24 non émissives de la lampe 16. Le rayonnement chauffant est en effet susceptible de chauffer les culots 20. Or chaque culot 20 comporte des éléments électroniques vulnérables à la chaleur. Pour ce faire, comme représenté à la figure 1, le support 14 comporte deux conduits 30 verticaux de refroidissement dans lesquels les culots 20 des lampes 16 sont agencés. Les conduits 30 de refroidissement sont agencés longitudinalement de part et d'autre du bloc 28 de réflecteurs 26. Un fluide caloporteur, tel que de l'air froid, alimente ces conduits 30 de refroidissement pour permettre le refroidissement des culots 20.

Comme cela est visible à la figure 2, une lentille 32 longitudinale est fixée à la lampe 16 d'extrémité inférieure. La lentille 32 est agencée transversalement en avant et à distance de la partie 22 émissive de la lampe 16 pour focaliser le rayonnement chauffant vers une zone sélectionnée de la préforme 12. La lentille 32 présente ici une longueur sensiblement égale à celle de la partie 22 émissive de la lampe 16.

Dans l'exemple représenté aux figures, seule une lampe 16 est munie d'une lentille 32. On comprendra néanmoins que l'invention est applicable à des modules dont plusieurs lampes 16 sont munies de lentilles identiques.

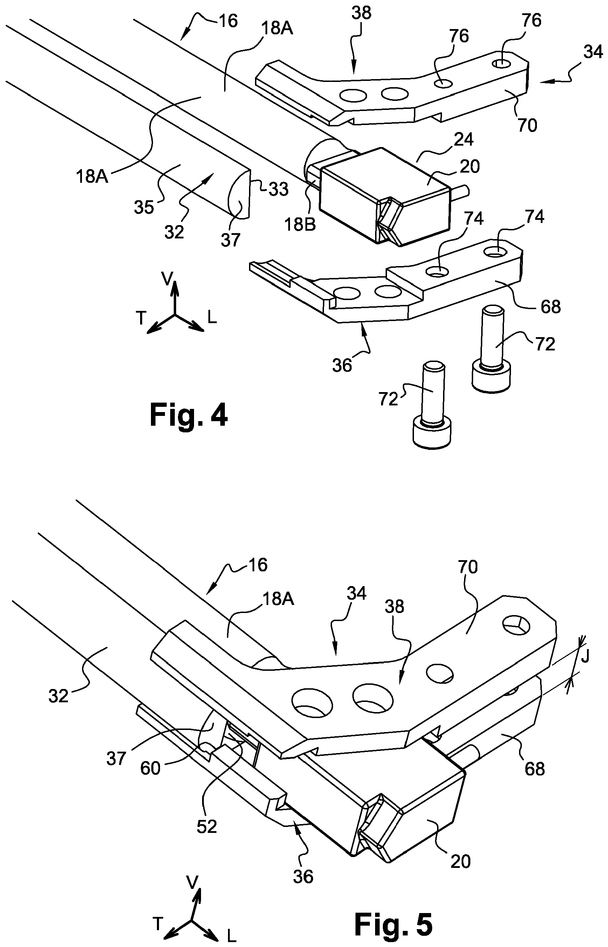

Comme représenté à la figure 4, la lentille 32 présente la forme d'un barreau cylindrique de courbe directrice non circulaire et d'axe longitudinal. La lentille 32 présente ici une face 33 verticale arrière plane et une face 35 avant courbe. Elle est délimitée longitudinalement par deux faces 37 latérales d'extrémité.

La lentille 32 est réalisée en un matériau transparent au rayonnement chauffant, par exemple en verre de quartz.

La lentille 32 est fixée directement sur la lampe 16 associée au moyen d'au moins une bride 34 de fixation. La bride 34 de fixation permet avantageusement une fixation amovible de la lentille 32 sur la lampe 16.

La fixation de chaque bride 34 sur la lampe 16 est réalisée uniquement sur une partie 24 non émissive de la lampe 16. La partie 22 émissive de la lampe 16 demeure ainsi totalement libre. Ceci permet de profiter de la totalité du rayonnement chauffant pour chauffer les préformes 12 en évitant la création de zones d'ombre.

La lentille 32 est fixée sur la lampe 16 par l'intermédiaire de deux brides 34 dont chacune est agencée à une extrémité longitudinale associée de la lampe 16.

Les deux brides 34 présentent une structure et un agencement identiques par symétrie axiale par rapport à un axe transversal. Par la suite on ne représentera et on ne décrira que la bride 34 agencée à l'extrémité droite de la lampe 16 en référence à la figure 1. Cette description sera applicable par symétrie à l'autre bride 34.

On a représenté aux figures 4 à 7 la bride 34 de fixation réalisée selon un premier mode de réalisation de l'invention. Dans ce premier mode de réalisation de l'invention, la bride 34 de fixation est fixée sur le culot 20 de la lampe 16.

La bride 34 est fixée par serrage sur le culot 20. A cette fin, la bride 34 de fixation comporte un mors 36 inférieur et un mors 38 supérieur. Ces deux mors 36, 38 sont ici réalisés en deux pièces distinctes.

Les deux mors 36, 38 sont fixés l'un à l'autre de manière à enserrer verticalement le culot 20 de la lampe 16 pour la fixation par serrage de la bride 34 sur la lampe 16, comme cela est illustré à la figure 5.

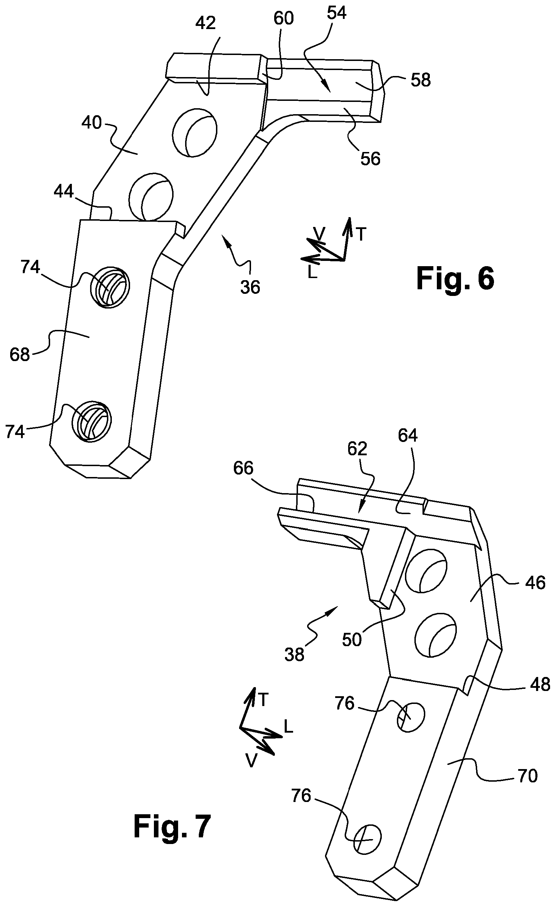

On a représenté le mors 36 inférieur plus en détail à la figure 6. Le mors 36 inférieur présente une première face 40 de serrage qui s'étend dans un plan transversal longitudinal. Cette première face 40 de serrage est tournée vers le mors 38 supérieur. Elle est destinée à venir en contact avec la face 23 inférieure plane du culot 20.

La face 40 de serrage est délimitée transversalement par une face 42 verticale avant et une face 44 verticale arrière qui sont en vis-à-vis et qui sont saillantes par rapport à la face 40 de serrage. Ces deux faces 42, 44 sont destinées à coopérer avec les faces 25, 27 avant et arrière du culot 20 pour bloquer dans les deux sens le déplacement transversal du mors 36 inférieur par rapport à la lampe 16.

En revanche, avant sa fixation avec le mors 38 supérieur, le mors 36 inférieur est susceptible de coulisser longitudinalement par rapport au culot 20. Ceci permet d'éviter un montage hyperstatique de la bride 34.

En se référant à présent à la figure 7, le mors 38 supérieur présente aussi une face 46 de serrage qui s'étend dans un plan transversal longitudinal. Cette face 46 de serrage est tournée vers la face 40 de serrage du mors 36 inférieur. Elle est destinée à venir en contact avec la face 21 supérieure plane du culot 20.

La face 46 de serrage est délimitée transversalement vers l'arrière par une face 48 verticale arrière qui est saillante par rapport à la face 46 de serrage. Cette face 48 arrière permet de positionner le mors 38 supérieur par rapport au culot 20 avant sa fixation avec le mors 36 inférieur par contact avec la face 27 arrière du culot 20.

En revanche, le mors 38 supérieur est libre de coulisser transversalement vers l'arrière par rapport au culot 20. Ceci permet d'éviter un montage hyperstatique de la bride 34.

Le mors 38 supérieur comporte aussi une face 50 verticale transversale, dite face 50 de butée longitudinale, qui est saillante par rapport à la face 46 de serrage. Cette face 50 de butée longitudinale limite la face 46 de serrage longitudinalement vers l'ampoule 18. Cette face 50 de butée longitudinale est destinée à coopérer avec la face 29 latérale interne du culot 20 qui est tournée vers l'ampoule 18 pour le positionnement longitudinal du mors 38 supérieur par rapport à la lampe 16.

Lorsqu'ils sont assemblés, les deux mors 36, 38 définissent à leur interface un logement 52 pour emprisonner radialement une extrémité longitudinale libre associée de la lentille 32.

Le logement 52 est décalé longitudinalement vers l'ampoule 18 par rapport aux faces 40, 46 de serrage. Ainsi, le logement 52 est ouvert transversalement dans les deux sens pour permettre le passage du rayonnement chauffant depuis la partie 22 émissive de la lampe 16 vers la préforme 12.

Comme représenté à la figure 6, le mors 36 inférieur comporte une moitié 54 inférieure du logement 52 qui s'étend ici longitudinalement depuis la partie du mors 36 inférieur qui porte la face 40 de serrage. La moitié 54 inférieure de logement 52 s'étend en direction de l'ampoule 18 de la lampe 16.

Cette moitié 54 inférieure de logement 52 présente une portée 56 inférieure qui s'étend dans un plan longitudinal transversal. La portée 56 est bordée vers l'avant par une face 58 concave qui est destinée à bloquer le coulissement de la lentille 32 transversalement vers l'avant par rapport au mors 36 inférieur en épousant la forme de la face 35 avant de la lentille 32.

En revanche, la lentille 32 est libre de coulisser transversalement vers l'arrière par rapport au mors 36 inférieur.

La moitié 54 inférieure de logement 52 est en outre délimitée longitudinalement vers la face 46 de serrage par une face 60 verticale de butée longitudinale. Cette face 60 de butée longitudinale est destinée à coopérer avec la face 37 d'extrémité associée de la lentille 32 pour empêcher le coulissement longitudinal dans un premier sens de la lentille 32 par rapport à la lampe 16.

Le mors inférieur de la bride agencé à l'autre extrémité de la lampe 16 comporte une face de butée longitudinale similaire mais tournée dans l'autre sens pour empêcher le coulissement longitudinal dans un deuxième sens de la lentille 32 par rapport à la lampe 16. Le coulissement longitudinal de la lentille 32 est ainsi bloqué dans les deux sens par rapport à la lampe 16.

En se reportant à présent à la figure 7, le mors 38 supérieur comporte une moitié 62 supérieure du logement 52 qui s'étend ici longitudinalement depuis la partie du mors 38 supérieur qui porte la face 46 de serrage. La moitié 62 supérieure de logement 52 s'étend en direction de l'ampoule 18 de la lampe 16.

Cette moitié 62 supérieure de logement 52 présente une forme de gouttière longitudinale qui est délimitée transversalement vers l'avant par une face 64 concave qui s'étend longitudinalement et qui est destinée à bloquer le coulissement de la lentille 32 transversalement vers l'avant par rapport au mors 36 inférieur en épousant la forme de la face 35 avant de la lentille 32.

La moitié 62 supérieure du logement 52 est aussi délimitée transversalement vers l'arrière par une face 66 verticale longitudinale. Cette face 66 verticale est destinée à coopérer avec la face 33 arrière de la lentille pour bloquer :
- le coulissement transversal vers l'arrière de la lentille 32 par rapport à la lampe 16 ; et
- la rotation de la lentille 32 autour de son axe longitudinal par rapport à la lampe 16.

En revanche, la lentille 32 est libre de coulisser longitudinalement dans les deux sens par rapport au mors 38 supérieur.

Pour fixer les deux mors 36, 38 l'un avec l'autre et permettre leur serrage sur le culot 20, chaque bride 34 comporte une queue 68, 70 qui s'étend transversalement vers l'arrière depuis leur face 40, 46 de serrage respective.

Les mors 36, 38 sont fixés ensembles par vissage de deux vis 72 d'axe vertical. A cet effet, la queue 68 du mors 36 inférieur comporte deux trous 74 débouchant lisses qui sont décalés transversalement l'un par rapport à l'autre. La queue 70 du mors 38 supérieur comporte deux trous 76 taraudés qui sont agencés en coïncidence avec les trous 74 du mors 36 inférieur.

En outre, les deux queues 68, 70 présentent des dimensions verticales qui permettent le serrage des faces 40, 46 de serrage contre le culot 20 en réservant un jeu "J" vertical entre les deux queues 68, 70, comme illustré à la figure 5. Des entretoises (non représentées) sont par exemple intercalées verticalement entre les deux queues 68, 70.

En outre, les queues 68, 70 s'étendent dans le conduit 30 de refroidissement.

Les mors 68, 70 de la bride 34 sont avantageusement réalisés en un matériau suffisamment bon conducteur de chaleur pour évacuer la chaleur des culots 20, par exemple en un matériau métallique. Ainsi, la bride 34 remplit aussi une fonction de radiateur pour le culot 20 de la lampe 16. La surface de contact entre le fluide caloporteur et le culot 20 se trouve ainsi augmentée, ce qui a pour effet d'améliorer le refroidissement du culot 20.

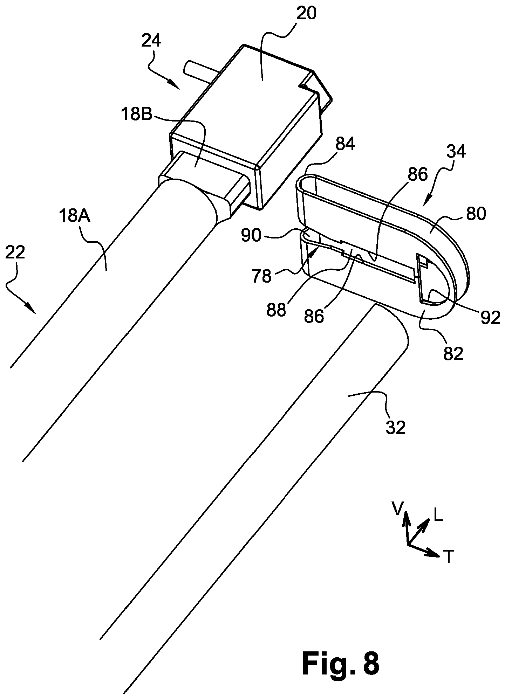

Selon un deuxième mode de réalisation de l'invention qui est représenté à la figure 8, la bride 34 de fixation est fixée sur la lampe 16 par emboîtement élastique d'une fente 78 de forme complémentaire à celle du pincement 18B.

Tout comme le premier mode de réalisation, la lentille 32 est portée par deux brides 34 présentant une structure et un agencement identiques par symétrie en miroir. Par la suite on ne représentera et on ne décrira qu'une seule bride 34, cette description étant applicable par symétrie à l'autre bride 34.

Comme représenté à la figure 8, la bride 34 est formée par découpage et pliage d'une tôle métallique. La bride 34 présente ainsi deux ailes 80, 82 verticales parallèles repliées à en forme de "U" ouvert transversalement vers l'avant. Les ailes 80, 82 sont ainsi reliées entre elles par un coude 84 d'extrémité transversale arrière depuis lequel elles s'étendent transversalement vers l'avant jusqu'à une extrémité libre.

La fente 78 est réalisée dans une portion d'extrémité arrière de la bride 34. La fente 78 s'étend transversalement dans chaque aile 80, 82 depuis une partie transversalement intermédiaire de la bride 34 pour déboucher vers l'arrière par le coude 84. La fente 78 est agencée verticalement à mi-hauteur de la bride 34. La fente 78 est délimitée verticalement par deux bords 86 transversaux opposés.

La fente 78 présente une dimension transversale supérieure à celle du pincement 18B. Un tronçon 88 d'extrémité avant de la fente 78 présente un contour sensiblement identique à celui de la section transversale verticale du pincement 18B. Ce tronçon 88 d'extrémité avant est délimité transversalement :
- vers l'avant par une face avant de butée longitudinale formant le fond de la fente 78 ; et
- vers l'arrière par un tronçon 90 d'extrémité arrière qui présente une extrémité avant formant un étranglement vertical par rapport au tronçon 88 d'extrémité avant.

Le tronçon 90 d'extrémité arrière présente une forme s'évasant depuis son extrémité avant jusqu'à son extrémité arrière. L'extrémité arrière présente une dimension verticale supérieure ou égale à celle du pincement 18B.

L'aile 82 de la bride 34 qui est tournée vers l'autre bride 34 comporte un orifice 92 qui est réalisé en avant de la fente 78. Cet orifice 92 présente un contour de forme complémentaire à celui de la section verticale transversale de la lentille 32.

Lors du montage de la bride 34, l'extrémité 37 de la lentille 32 est insérée longitudinalement dans l'orifice 92 jusqu'à venir en butée contre l'autre aile 80.

Puis, la bride 34 est emboîtée transversalement vers l'arrière sur le pincement 18B. Le coulissement du pincement 18B dans le tronçon 90 d'extrémité arrière évasé de la fente 78 provoque l'écartement vertical des deux bords 86 opposés de la fente 78, permettant le passage du pincement 18B à travers l'étranglement jusqu'au tronçon 88 d'extrémité avant de la fente 78. Lorsque le pincement 18B est entièrement logé dans le tronçon 88 d'extrémité avant, les bords opposés de la fente 78 sont rappelés élastiquement dans leur position d'origine, l'étranglement interdisant ainsi le retrait de la bride 34 par rapport au pincement 18B. Chaque bride 34 est alors fixée à la lampe 16

La lentille 32 est maintenue radialement par rapport aux brides 34 par les bords de l'orifice 92. En outre, la lentille 32 est bloquée longitudinalement dans les deux sens par le contact de ses extrémités 37 avec les ailes 80 non munie de l'orifice 92.

L'aile 80 non munie de l'orifice 92 est en contact longitudinal avec le culot 20, ce qui permet à la bride 34 de remplir la fonction de radiateur, tout comme dans le premier mode de réalisation.

En outre, la bride 34 étant agencée à proximité immédiate du culot 20, le fluide caloporteur entre aussi en contact avec elle, permettant son refroidissement.

Par ailleurs, la bride 34 étant fixée sur le pincement 18B, qui appartient à la partie non émissive de la lampe 16, aucune zone d'ombre n'est créée par la présence de la bride 34.

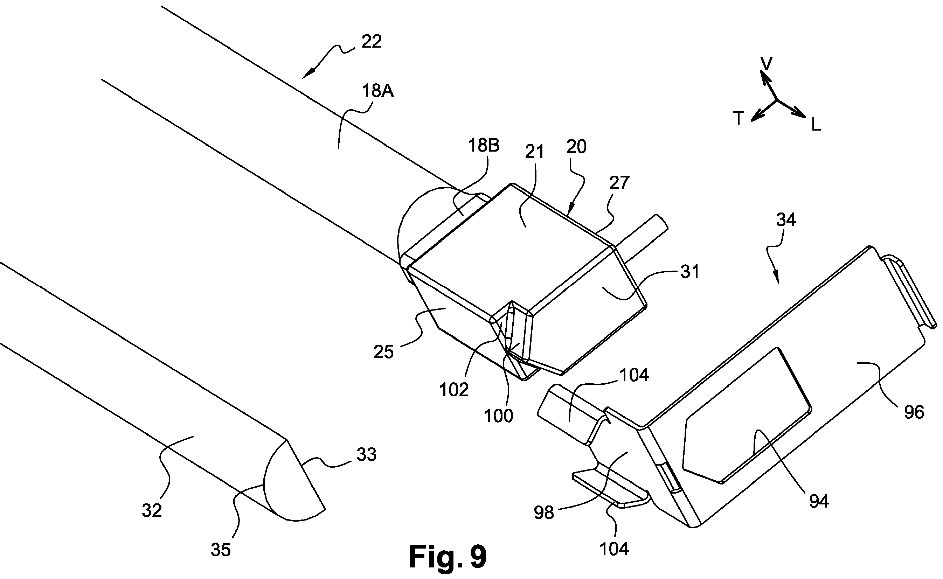

Selon un troisième mode de réalisation de l'invention qui est représenté à la figure 9, la bride 34 de fixation est fixée sur la lampe 16 par emboîtement longitudinal d'une fenêtre 94 de forme complémentaire à celle d'une extrémité longitudinale libre du culot 20.

Tout comme le premier mode de réalisation, la lentille 32 est portée par deux brides 34 présentant une structure et un agencement identiques par symétrie en miroir. Par la suite on ne représentera et on ne décrira qu'une seule bride 34, cette description étant applicable par symétrie à l'autre bride 34.

Comme représenté à la figure 9, la bride 34 est formée par découpage et pliage d'une tôle métallique. La bride 34 présente une forme d'équerre comportant une première aile 96 transversale verticale et une deuxième aile 98 verticale qui s'étend longitudinalement vers l'autre extrémité de la lampe 22 depuis un bord d'extrémité transversale avant de la première aile 96.

La fenêtre 94 est réalisée dans la première aile 96 longitudinale de la bride 34. Elle présente une forme complémentaire de l'extrémité longitudinale libre du culot 20. Dans le mode de réalisation représenté à la figure 9, la face 31 latérale externe du culot 20 présente des encoches 100. Le culot 20 présente ainsi un tronçon d'extrémité longitudinale libre qui présente un profil transversal différent du reste du culot. Le tronçon d'extrémité libre présente ainsi le même profil transversal rectangulaire que le reste du culot 20, à la différence que deux sommets sont biseautés pour former les encoches.

La fenêtre 94 présente ainsi cette forme de rectangle biseauté, de sorte que lorsque la bride 34 est emboîtée longitudinalement sur le tronçon d'extrémité libre du culot 20, elle vienne en butée longitudinale contre des faces 102 d'épaulement qui délimitent longitudinalement les encoches 100.

La première aile 96 permet ainsi la fixation de la bride 34 sur le culot 20 par emboîtement longitudinal.

La deuxième aile 98 de la bride 34 comporte des moyens de support de la lentille 32. Ces moyens de support sont formés par deux pattes 104. Une patte 104 s'étend transversalement vers l'avant depuis un bord inférieur de l'aile 98, tandis que l'autre patte 104 s'étend transversalement vers l'avant depuis un bord supérieur de l'aile 98. Les deux pattes 98 sont rabattus l'une vers l'autre à la manière d'une agrafe de manière à former un logement susceptible de recevoir la lentille 32 en coulissement longitudinal.

Lors du montage, la bride 34 est tout d'abord montée par emboîtement axial de sa première aile 96 sur le tronçon d'extrémité libre du culot 20. La deuxième aile 98 s'étend alors contre la face 25 avant du culot 20.

Pour permettre un maintien suffisant de la bride 34 sur le culot 20, la fenêtre 94 est par exemple emboîtée avec ajustement serré sur l'extrémité libre du culot 20.

Ensuite, la lentille 32 est insérée en coulissement longitudinal entre les pattes 104 de la deuxième aile 96. Ainsi, la face 33 arrière plane de la lentille 32 est en contact plan avec une face avant de l'aile 98, tandis que les pattes retiennent la lentille 32 verticalement dans les deux sens et transversalement vers l'avant.

En outre, la lentille 32 est bloquée longitudinalement dans les deux sens par serrage des pattes 104 contre une face 35 avant bombée de la lentille 32.

Les deux ailes 96, 98 sont en contact avec le culot 20, ce qui permet à la bride 34 de remplir la fonction de radiateur, tout comme dans le premier mode de réalisation.

En outre, la bride 34 étant agencée contre deux faces du culot 20, le fluide caloporteur entre aussi en contact avec elle, permettant son refroidissement.

Par ailleurs, la bride 34 étant fixée sur le culot 20, qui appartient à la partie non émissive de la lampe 16, aucune zone d'ombre n'est créée par la présence de la bride 34.

Ainsi, le module 10 de chauffage réalisé selon l'un quelconque des modes de réalisation de l'invention permet de profiter de la totalité du rayonnement pour le chauffage des préformes 12 sans création de zones d'ombre.

La fixation de la lentille 32 sur la lampe est parfaitement stable car elle est réalisée sur des parties non émissives qui ne présentent pas de symétrie de révolution autour d'un axe longitudinal.

Les brides 34 permettent aussi de remplir une fonction de radiateur qui favorise le refroidissement des culots 20.

En outre, la fixation des brides 34 sur les parties non émissives de la lampe 16 permet de ne pas avoir à modifier la structure des réflecteurs 26 et du bloc 28 les portants.

Ainsi, le module 10 de chauffage réalisé selon l'un quelconque des modes de réalisation de l'invention permet de profiter de la totalité du rayonnement pour le chauffage des préformes 12 sans création de zones d'ombre.

La fixation de la lentille 32 sur la lampe est parfaitement stable car elle est réalisée sur des parties non émissives qui ne présentent pas de symétrie de révolution autour d'un axe longitudinal.

Les brides 34 permettent aussi de remplir une fonction de radiateur qui favorise le refroidissement des culots 20.

En outre, la fixation des brides 34 sur les parties non émissives de la lampe 16 permet de ne pas avoir à modifier la structure des réflecteurs 26 et du bloc 28 les portants.

## Revendications

1. Module (10) de chauffage pour une préforme (12) en matériau thermoplastique, qui comporte :
- au moins une lampe (16) comportant une ampoule (18) tubulaire d'axe (A) longitudinal, l'ampoule (18) étant fermée à ses deux extrémités longitudinales par deux pincements (18B), la lampe (16) comportant deux culots (20) fixés chacun à l'un des pincements (18B), le tronçon tubulaire (18A) de l'ampoule formant une partie (22) émissive d'un rayonnement électromagnétique chauffant, tandis que les pincements (18B) et les culots (20) forment une partie (24) non émissive n'émettant pas ledit rayonnement chauffant ;
- au moins une lentille (32) longitudinale qui est fixée à la lampe (16), au moyen d'au moins une bride (34) de fixation, parallèlement à la partie (22) émissive pour focaliser le rayonnement chauffant vers une zone sélectionnée de la préforme et permettre une fixation amovible de la lentille (32) sur la lampe (16);
dans lequel la fixation de chaque bride (34) sur la lampe (16) est réalisée uniquement sur la partie non émissive (24) de la lampe.

2. Module (10) de chauffage selon la revendication précédente, **caractérisé en ce qu'**il comporte au moins un réflecteur (26) qui est agencé à distance de la partie (22) émissive de la lampe (16), en opposition par rapport à la lentille (32).

3. Module (10) de chauffage selon la revendication précédente, **caractérisé en ce que** la bride (34) est fixée par serrage sur la partie (24) non émissive de la lampe (16).

4. Module (10) de chauffage selon l'une quelconque des revendications 1 à 3, **caractérisé en ce que** la bride (34) de fixation est fixée par emboîtement élastique de formes complémentaires sur la partie (24) non émissive de la lampe (16).

5. Module (10) de chauffage selon l'une quelconque des revendications précédentes, **caractérisé en ce qu'**au moins une bride (34) de fixation est fixée sur l'un des culots (20).

6. Module (10) de chauffage selon la revendication précédente, **caractérisé en ce que** la bride (34) est fixée par emboitement longitudinale d'une fenêtre (94) de la bride (34) sur une extrémité longitudinale libre de forme complémentaire du culot (20).

7. Module (10) de chauffage₁₈selon la revendication 5 prise en combinaison avec la revendication 3, **caractérisé en ce que** la bride (34) de fixation comporte deux mors (36, 38) qui enserrent le culot (20) de la lampe (16) pour la fixation par serrage de la bride (34) sur la lampe (16).

8. Module (10) de chauffage selon la revendication précédente, **caractérisé en ce que** les deux mors (36, 38) définissent à leur interface un logement (52) pour emprisonner une extrémité longitudinale libre de la lentille (32).

9. Module (10) de chauffage selon la revendication précédente, **caractérisé en ce qu'**au moins un mors (38) comporte une face (50) de butée longitudinale contre une face (29) associée du culot (20) pour le positionnement longitudinal de la bride (34) sur la lampe (16).

10. Module (10) de chauffage selon l'une quelconque des revendications 7 à 9, **caractérisé en ce que** les mors (36, 38) sont fixés ensembles par vissage.

11. Module (10) selon l'une quelconque des revendications précédentes, **caractérisé en ce qu'**au moins une bride (34) de fixation est fixée sur un des pincements (18B) de la lampe (16).

12. Module (10) de chauffage selon la revendication précédente prise en combinaison avec la revendication 4, **caractérisé en ce que** la bride (34) de fixation comporte une fente (78) munie d'un étranglement qui est emboîtée élastiquement sur le pincement (18B) associé de la lampe (16).

13. Module (10) de chauffage selon l'une quelconque des revendications précédentes, **caractérisé en ce que** chaque bride de fixation est réalisée en un matériau conducteur de chaleur pour faire office de radiateur pour les parties (24) non émissives.

14. Module selon l'une quelconque des revendications précédentes, **caractérisé en ce qu'**il comprend un support (14) fixe qui porte une pluralité de lampes (16), le support (14) comportant des moyens de refroidissement des culots (20) des lampes par circulation d'un fluide caloporteur au niveau des parties non émissives de la lampe (16).

## Patentansprüche

1. Heizmodul (10) für einen Vorformling (12) aus einem thermoplastischen Material, das Folgendes umfasst:
- mindestens eine Lampe (16), die einen röhrenförmigen Kolben (18) mit einer Längsachse (A) umfasst, wobei der Kolben (18) an seinen beiden Längsenden durch zwei Klemmstücke (18B) verschlossen ist, wobei die Lampe (16) zwei Sockel (20) umfasst, die jeweils an einem der Klemmstücke (18B) befestigt sind, wobei der röhrenförmige Abschnitt (18A) des Kolbens einen eine elektromagnetische Wärmestrahlung emittierenden Teil (22) bildet, während die Klemmstücke (18B) und die Sockel (20) einen nicht emittierenden Teil (24), der die Wärmestrahlung nicht emittiert, bilden;
- mindestens eine längliche Linse (32), die mittels mindestens einer Befestigungsschiene (34) parallel zu dem emittierenden Teil (22) an der Lampe (16) befestigt ist, um die Wärmestrahlung auf einen ausgewählten Bereich des Vorformlings zu fokussieren und eine lösbare Befestigung der Linse (32) an der Lampe (16) zu ermöglichen;
wobei die Befestigung jeder Schiene (34) an der Lampe (16) nur an dem nicht emittierenden Teil (24) der Lampe erfolgt.

2. Heizmodul (10) nach dem vorhergehenden Anspruch, **dadurch gekennzeichnet, dass** es mindestens einen Reflektor (26) umfasst, der auf der entgegengesetzten Seite der Linse (32) zu dem emittierenden Teil (22) der Lampe (16) beabstandet angeordnet ist.

3. Heizmodul (10) nach dem vorhergehenden Anspruch, **dadurch gekennzeichnet, dass** die Schiene (34) durch Klemmen an dem nicht emittierenden Teil (24) der Lampe (16) befestigt ist.

4. Heizmodul (10) nach einem der Ansprüche 1 bis 3, **dadurch gekennzeichnet, dass** die Befestigungsschiene (34) durch elastisches Aufstecken komplementärer Formen an dem nicht emittierenden Teil (24) der Lampe (16) befestigt ist.

5. Heizmodul (10) nach einem der vorhergehenden Ansprüche, **dadurch gekennzeichnet, dass** mindestens eine Befestigungsschiene (34) an einem der Sockel (20) befestigt ist.

6. Heizmodul (10) nach dem vorhergehenden Anspruch, **dadurch gekennzeichnet, dass** die Schiene (34) durch Längsaufstecken einer Öffnung (94) der Schiene (34) an einem freien Längsende mit komplementärer Form des Sockels (20) befestigt ist.

7. Heizmodul (10) nach Anspruch 5 in Kombination mit Anspruch 3, **dadurch gekennzeichnet, dass** die Befestigungsschiene (34) zwei Backen (36, 38) umfasst, die den Sockel (20) der Lampe (16) umgreifen, um die Schiene (34) durch Klemmen an der Lampe (16) zu befestigen.

8. Heizmodul (10) nach dem vorhergehenden Anspruch, **dadurch gekennzeichnet, dass** die zwei Backen (36, 38) an ihrer Schnittstelle eine Aufnahme (52) definieren, um ein freies Längsende der Linse (32) einzufassen.

9. Heizmodul (10) nach dem vorhergehenden Anspruch, **dadurch gekennzeichnet, dass** mindestens eine Backe (38) eine Fläche (50) für einen Längsanschlag gegen eine mit dem Sockel (20) assoziierte Fläche (29) umfasst, um die Schiene (34) in Längsrichtung auf der Lampe (16) zu positionieren.

10. Heizmodul (10) nach einem der Ansprüche 7 bis 9, **dadurch gekennzeichnet, dass** die Backen (36, 38) durch Verschrauben aneinander befestigt sind.

11. Modul (10) nach einem der vorhergehenden Ansprüche, **dadurch gekennzeichnet, dass** mindestens eine Befestigungsschiene (34) an einem der Klemmstücke (18B) der Lampe (16) befestigt ist.

12. Heizmodul (10) nach dem vorhergehenden Anspruch in Kombination mit Anspruch 4, **dadurch gekennzeichnet, dass** die Befestigungsschiene (34) einen Schlitz (78) mit einer Verengung umfasst, der elastisch auf das mit der Lampe (16) assoziierte Klemmstück (18B) aufgesteckt wird.

13. Heizmodul (10) nach einem der vorhergehenden Ansprüche, **dadurch gekennzeichnet, dass** jede Befestigungsschiene aus einem wärmeleitenden Material hergestellt ist, um als Radiator für die nicht emittierenden Teile (24) zu dienen.

14. Modul nach einem der vorhergehenden Ansprüche, **dadurch gekennzeichnet, dass** es eine feste Halterung (14) beinhaltet, die eine Vielzahl von Lampen (16) trägt, wobei die Halterung (14) Mittel zum Kühlen der Sockel (20) der Lampen durch die Zirkulation einer Wärmeträgerflüssigkeit im Bereich der nicht emittierenden Teile der Lampe (16) umfasst.

## Claims

1. Heating module (10) for a preform (12) made of thermoplastic material, which comprises:
- at least one lamp (16) comprising a tubular bulb (18) of longitudinal axis (A), the bulb (18) being sealed at its two longitudinal ends by two pinches (18B), the lamp (16) comprising two caps (20) each fixed to one of the pinches (18B), the tubular section (18A) of the bulb forming an emissive part (22) emitting heating electromagnetic radiation, while the pinches (18B) and the caps (20) form a non-emissive part (24) not emitting said heating radiation;
- at least one longitudinal lens (32) which is fixed to the lamp (16), by means of at least one fixing brace (34), parallel to the emissive part (22) for focusing the heating radiation to a selected zone of the preform and allowing removable fixing of the lens (32) to the lamp (16);
wherein the fixing of each brace (34) on the lamp (16) is done solely on the non-emissive part (24) of the lamp.

2. Heating module (10) according to the preceding claim, **characterized in that** it comprises at least one reflector (26) which is arranged at a distance from the emissive part (22) of the lamp (16), in opposition with respect to the lens (32).

3. Heating module (10) according to the preceding claim, **characterized in that** the brace (34) is fixed by clamping onto the non-emissive part (24) of the lamp (16).

4. Heating module (10) according to any one of Claims 1 to 3, **characterized in that** the fixing brace (34) is fixed by elastic fitting of complementary forms onto the non-emissive part (24) of the lamp (16).

5. Heating module (10) according to any one of the preceding claims, **characterized in that** at least one fixing brace (34) is fixed onto one of the caps (20) .

6. Heating module (10) according to the preceding claim, **characterized in that** the brace (34) is fixed by longitudinal fitting of a window (94) of the brace (34) onto a free longitudinal end of complementary form of the cap (20).

7. Heating module (10) according to Claim 5 taken in combination with Claim 3, **characterized in that** the fixing brace (34) comprises two jaws (36, 38) which grip the cap (20) of the lamp (16) for the clamped fixing of the brace (34) onto the lamp (16).

8. Heating module (10) according to the preceding claim, **characterized in that** the two jaws (36, 38) define, at their interface, a housing (52) for tightly holding a free longitudinal end of the lens (32) .

9. Heating module (10) according to the preceding claim, **characterized in that** at least one jaw (38) comprises a face (50) of longitudinal abutment against an associated face (29) of the cap (20) for the longitudinal positioning of the brace (34) on the lamp (16).

10. Heating module (10) according to any one of Claims 7 to 9, **characterized in that** the jaws (36, 38) are fixed together by screwing.

11. Module (10) according to any one of the preceding claims, **characterized in that** at least one fixing brace (34) is fixed onto one of the pinches (18B) of the lamp (16).

12. Heating module (10) according to the preceding claim taken in combination with Claim 4, **characterized in that** the fixing brace (34) comprises a slit (78) provided with a constriction which is elastically fitted onto the associated pinch (18B) of the lamp (16) .

13. Heating module (10) according to any one of the preceding claims, **characterized in that** each fixing brace is made of a heat-conducting material to serve as heat sink for the non-emissive parts (24).

14. Module according to any one of the preceding claims, **characterized in that** it comprises a fixed support (14) which bears a plurality of lamps (16), the support (14) comprising means for cooling the caps (20) of the lamps by circulation of a heat-transfer fluid at the non-emissive parts of the lamp (16).
